Europäisches Patentamt

European Patent Office

Office européen des brevets

(11) Numéro de publication: **0 185 569**
**A1**

## (12) DEMANDE DE BREVET EUROPEEN

(21) Numéro de dépôt: **85402228.2**

(22) Date de dépôt: **18.11.85**

(51) Int. Cl.⁴: **C 09 B 1/48**
**C 09 B 5/00, D 06 P 1/22**

(30) Priorité: **20.11.84 FR 8417659**

(43) Date de publication de la demande:
**25.06.86 Bulletin 86/26**

(84) Etats contractants désignés:
**AT BE CH DE FR GB IT LI LU NL SE**

(71) Demandeur: **Razavi, David**
**29, avenue de Lamballe**
**F-75016 Paris(FR)**

(72) Inventeur: **Razavi, David**
**29, avenue de Lamballe**
**F-75016 Paris(FR)**

(74) Mandataire: **Warcoin, Jacques et al,**
**Cabinet Régimbeau 26, avenue Kléber**
**F-75116 Paris(FR)**

(54) **Procédé de préparation de colorants de cuve anthraquinoniques, nouveaux colorants obtenus par ce procédé et produits textiles teints par ces colorants.**

(57) La présente invention concerne un procédé de préparation de colorants de cuve anthraquinoniques à partir de dérivés anthraquinoniques non cuvables.

On dissout un dérivé anthraquinonique et un auxiliaire de condensation borique dans un solvant, on effectue la condensation en chauffant selon un profil de température approprié le dérivé anthraquinonique et l'auxiliaire de condensation dissous, on récupère le colorant produit de la condensation et on lave et/ou on sèche le colorant récupéré.

La présente invention concerne également les colorants obtenus par ce procédé et les produits textiles teints par ce colorant.

EP 0 185 569 A1

PROCEDE DE PREPARATION DE COLORANTS DE CUVE
ANTHRAQUINONIQUES, NOUVEAUX COLORANTS OBTENUS PAR CE
PROCEDE ET PRODUITS TEXTILES TEINTS PAR CES COLORANTS.

La présente invention concerne un procédé de préparation
de colorants de cuve à base de dérivés anthraquinoniques
non cuvables, les colorants de cuve obtenus par ce procédé et les produits textiles teints par ces colorants.

La préparation de colorants de cuve anthraquinoniques à partir de dérivés anthraquinoniques non cuvables est connue.

Toutefois, ces procédés connus présentent de nombreux inconvénients. Dans certains de ces procédés, les dérivés anthraquinoniques sont obtenus après plusieurs réactions chimiques
successives. Ceci réduit considérablement les rendements.
Ainsi, pour synthétiser le colorant Brun BR, on condense
tout d'abord la 1,4 diaminoanthraquinone avec l'α-chloro-
anthraquinone, pour former la trianthrimide qui subit une
autre réaction chimique pour former le colorant Brun BR
(Schultz Tab N 1 294; Beil 24 II 320 ; Beil H 200, I 463,
II 114).

D'autres procédés qui permettent de transformer les dérivés
anthraquinoniques non cuvables,en une seule étape, en des
colorants de cuve, sont également connus. Par exemple, la
synthèse du colorant Bleu indanthrène RS par fusion alcaline
oxydante de la monoaminoanthraquinone a été décrite par
Fredl 24.868 ; CA 32.4176). La fusion alcaline a lieu à
une température élevée, environ 220°, et est très violente,
ce qui décompose une partie du colorant de départ et une
partie du colorant synthétisé. Le rendement est donc faible :
45 % environ. D'autres réactions en une seule étape

doivent être conduites dans des conditions très corrosives, et n'ont pu être appliquées industriellement à la transformation des dérivés anthraquinoniques polyaminés ou polyhydroxylés.

Le brevet US 3 268 532 décrit un procédé de préparation de colorants anthraquinoniques par condensation. Dans ce brevet, pour améliorer le rendement de condensation, il est nécessaire de baisser la température de fusion alcaline qui détruit le colorant formé (200-220°C à 120°C) par l'utilisation d'un solvant polaire (DMSO). Au contraire, les colorants selon l'invention supportent des températures élevées (185-195°C).

Le Demandeur a comparé les colorants obtenus à partir du même dérivé anthraquinonique (diamino anthraquinone) par le procédé selon l'invention (exemple 1) et le procédé selon le brevet US 3 268 532 (exemple 4). Les résultats apparaissent dans le tableau suivant :

|  | COLORANT CONNU | COLORANT SELON L'INVENTION |
|---|---|---|
| solvant acide sulfurique concentré | vert-olive | brun-foncé |
| solvant solution aqueuse d'hydrosulfite-soude caustique à 50°-60° | bleu-gris (non limpide) | brun-jaune (claire-limpide) |
| Rendement | < 80 % | 97 % |
| Tissu de coton ( même concentration en colorant) | vert-olive | noir |

Le trouble dans la cuve prouve la présence d'impuretés dans le colorant de l'art antérieur et permet de prévoir des risques de plaquage dans les cuves.

La présente invention remédie à ces inconvénients. Elle propose un procédé de préparation de colorants de cuve à partir de dérivés anthraquinoniques non cuvables en une seule étape de synthèse avec un rendement supérieur au rendement des procédés connus, purs, et qui donnent lieu à des colorants ayant de très bonnes propriétés de solidité à la lumière, aux intempéries et au lavage.

De plus, le procédé selon l'invention permet une condensation directe des hydroxyanthraquinones (quinizarine) en colorant de cuve.

La présente invention concerne donc un procédé de préparation de colorants de cuve à partir de dérivés anthraquinoniques non cuvables, caractérisé en ce que l'on dissout un dérivé anthraquinonique et un auxiliaire de condensation borique dans un solvant, on effectue la condensation en chauffant selon un profil de température approprié le dérivé anthraquinonique et l'auxiliaire de condensation borique dissous, on récupère le colorant produit de la condensation, et on lave et/ou on sèche le colorant récupéré.

Afin d'améliorer les qualités techniques des colorants ou leurs nuances, ces colorants obtenus peuvent subir d'autres réactions chimiques telles que l'alkylation, l'halogénation ou l'acylation, ces types de procédé étant connus dans leurs principes.

Les dérivés anthraquinoniques produits de départ du procédé selon l'invention, comportent un ou plusieurs radicaux choisis parmi les radicaux hydroxy, amino, halogéno, tels que

4    **0185569**

fluoro, chloro, bromo ou iodo, alkyles inférieurs, en particulier en $C_1$ à $C_5$, acylamino, certaines liaisons pouvant en outre être hydrogénées. En particulier, on utilise la 1,4-dihydroxyanthraquinone, la 1,4-diaminoanthraquinone, la 1,4-hydroxyaminoanthraquinone, la 1,5-diaminoanthraquinone ou la 1,4-aminobenzoylaminoanthraquinone. Dans le mode

Dans le mode préféré de mise en oeuvre du procédé, l'auxiliaire de condensation borique utilisé est l'acide borique, cependant on peut utiliser des borates alcalins tels que le borate de soude. Le solvant approprié doit présenter de préférence un point d'ébullition élevé compatible avec les températures réactionnelles et en outre, ce solvant doit être capable de former le complexe borique avec le dérivé anthraquinonique de départ. Ces solvants sont en général des alcools à point d'ébullition élevé, des lactones ou des dérivés glycoliques. Dans un mode particulier de réalisation, le solvant utilisé est la γ-butyrolactone. Dans un autre mode particulier de réalisation, on utilise le diéthylèneglycol. Ces solvants ont un bon pouvoir de solubilisation des dérivés anthraquinoniques, un point d'ébullition élevé, et favorisent la formation des complexes d'acide borique et des dérivés anthraquinoniques.

La température à laquelle on conduit la condensation est choisie en général entre 100 et 220° C, de préférence entre 130 et 210° C. Le profil de température comprend en général une montée en température, en 10 mn à 3 h 1/2, puis au moins un palier où la température est maintenue constante entre 3 et 10 h.

Afin de favoriser la réaction, on peut utiliser des quantités additionnelles d'au moins un catalyseur. Les catalyseurs appropriés peuvent être des acides forts, faibles, ou des bases que l'on ajoute au mélange initial ou en cours de réac-

tion. En particulier, on utilise le bicarbonate de soude, le borate de soude, le carbonate de soude, l'acide paratoluènesulfonique, l'acide sulfurique, les sels d'ammonium tels que le chlorure d'ammonium et l'acétate d'ammonium.

La durée de la réaction est comprise en général entre 2 et 12 h.

A la fin de la réaction, on peut récupérer le colorant par évaporation du solvant. On peut alors recycler le solvant. Dans un autre mode de réalisation de l'invention, on récupère le colorant qui précipite après que l'on ait ajouté de l'eau au mélange issu de la condensation. Par filtration, on récupère alors le colorant en gâteau, on le lave à l'eau, chaude de préférence, afin de le débarasser de l'acide borique restant et on sèche le gâteau pour obtenir le colorant en poudre.

Dans un autre mode de réalisation de l'invention, on précipite le colorant par l'addition d'un solvant différent du solvant de condensation, par exemple du 1,2-dichloroéthane. On lave alors le gâteau obtenu par filtration avec le même solvant 1,2-dichloroéthane. Puis on lave à l'eau pour éliminer l'acide borique, et on sèche le gâteau pour obtenir le colorant en poudre.

Après l'adjonction d'eau et la filtration, on récupère le filtrat pour en extraire les solvants, afin de le recycler.

Les rendements sont excellents, de l'ordre de 90 à 100 %.

La présente invention concerne également les colorants de cuve produits par le procédé selon l'invention. Il possède de très bonnes qualités de solidité à la lumière, aux lavages et aux intempéries.

Ces colorants peuvent être employés en particulier pour la teinture de matières textiles, particulièrement pour teindre le coton d'un bain d'hydrosulfites.

D'autres caractéristiques et avantages de l'invention apparaitront à la lecture des exemples ci-après  Dans ces exemples, les parties de matière indiquées, s'entendent en poids, sauf mentions contraires.

EXEMPLE 1

Dans un appareil muni d'un refrigérant descendant, d'un thermomètre et d'un agitateur, on introduit 24 parties 1,4-diaminoanthraquinone, 12 parties d'acide borique, 90 parties, en volume, de γ-butyrolactone, et 3 parties de bicarbonate de soude. En deux heures à deux heures et demi, on monte la température du mélange à 180 - 185° et on maintient le mélange pendant 8 heures à 185° - 195°. On distille alors le solvant sous pression réduite, on ajoute de l'eau, on filtre et on lave à l'eau.

On obtient une poudre noire qui teint le coton , d'un bain d'hydrosulfite brun-jaune limpide.en noir bleuté très solide à la lumière, aux lavages et aux intempéries.
Poids de colorant obtenu : 23,3 parties.
Le rendement est de 97 %.

EXEMPLE 2.

Dans un appareil identique à celui de l'exemple 1, on introduit 24 parties de 1,4- diaminoanthraquinone, 12 parties d'acide borique et 50 parties,en volume, de butyrolactone.

On monte la température du mélange en une heure à 160°,
puis en 20 minutes à 180-185°, puis on maintient cette
température pendant 7 heures. On laisse refroidir à 80°.
On ajoute alors 70 parties, en volume, de 1,2-dichloroéthane. Ce qui provoque la précipitation complète du colorant, ensuite on filtre, on lave le gâteau de colorant
avec 3 x 30 parties, en volume, du même solvant,

On chauffe le gâteau pour en récupérer le reste du solvant,
on le traite à l'eau chaude pour en extraire l'acide borique et on sèche le colorant. On obtient une poudre noire
qui teint le coton, d'un bain d'hydrosulfite en noir.
Poids de colorant obtenu  : 22,6 parties.
Le rendement est de 94 %.


EXEMPLE 3 :

Dans un appareil identique à celui de l'exemple 1, on mélange 24 parties de 1,4-diaminoanthraquinone, 10 parties d'acide borique, 5 parties de borate de soude dans 100 parties
en volume de γ-butyrolactone. On monte en une heure la
température du mélange à 160° et on la maintient pendant
10 heures. On ajoute 500 parties d'eau, on filtre, on lave
à l'eau, et on sèche. On obtient une poudre noirâtre qui
teint le coton, d'un bain d'hydrosulfite en un brun foncé.
Poids de colorant obtenu : 23,2 parties.
Le rendement est de 97 %.

EXEMPLE 4 :

Dans un appareil identique à celui de l'exemple 1, on mélange
36 parties de 1,4-diaminoanthraquinone, 18 parties d'acide

borique, 1,5 parties d'acide paratoluènesulfonique et 130 parties en volume de butyrolactone. On monte la température du mélange,en une heure et demie, à 160°-165° puis on maintient pendant 6 heures la température entre 165 et 180° (en suivant la marche de réaction par des prises de chromato) après environ 7 heures, on vérifie par chromato la disparition du colorant de départ. On récupère le solvant sous pression réduite, on ajoute de l'eau, on filtre, on lave à l'eau et on sèche. On obtient une poudre noire qui teint le coton  à partir d'un bain d'hydrosulfite en brun foncé vif. Le colorant obtenu a une très bonne solidité générale.

Poids de colorant obtenu : 36 parties

Le rendement est de 100 %.

EXEMPLE 5 :

Dans un appareil identique à celui de l'exemple 1, on mélange 16 parties de 1,4-diaminoanthraquinone, 7 parties d'acide borique, 5 parties de chlorure d'ammonium et 50 parties en volume de butyrolactone. On monte la température de mélange ,sous reflux,en 10 minutes à 150°, en 3 heures à 165°, puis on maintient le mélange,sous reflux, 5 heures entre 165-175°.  On verse dans l'eau, on filtre, on lave à l'eau et on sèche. On obtient une poudre foncée qui teint le coton d'une cuve d'hydrosulfite en gris bleuté.

EXEMPLE 6 :

On chauffe au bain-marie un mélange de 12 parties de 1,4-diaminoanthraquinone, 10 parties d'acide borique, 2 parties de carbonate de soude et 40 parties en volume de butyrolactone. On monte la température du mélange en une demi heure à 175° et on maintient pendant 4 heures et demi cette température. On ajoute 300 parties de l'eau, on filtre, on lave à l'eau et on sèche. On obtient un colorant qui teint le coton à partir d'un bain d'hydrosul-fite en gris bleuté de très bonne solidité.

Poids de colorant obtenu : 11,9 parties.

Le rendement est de 99 %.

EXEMPLE 7.

On chauffe un mélange de 12 parties de 1,4-dihydroxyanthraquinone, 8 parties de l'acide borique, 2,5 parties de borate de soude et de 40 parties de butyrolactone. On monte la température une heure à 160° et puis on maintient la température pendant quatre heures et demie entre 165° et 180°. On ajoute 7 parties de borate de soude et puis après 2 heures, on ajoute 12 parties en volume de sulfate de méthyle en maintenant la température à 160°-180° pendant encore une heure. On reprend à l'eau, on filtre, on lave à l'eau et on sèche. On obtient une poudre foncée qui teint le coton d'une cuve d'hydrosulite en brun foncé rougeâtre.

Poids de colorant obtenu : 1 3, 3 parties.

EXEMPLE 8

On chauffe un mélange de 1 2 parties de quinizarine (1 ,4-dihydroxyanthraquinone), 6 parties d'acide borique, 4 parties de chlorure d'ammonium, 8 parties d'acétate d'ammonium, et 42 parties en volume de diéthylèneglycol. On chauffe et on monte la température à 1 20° et on maintient pendant 3 heures cette température entre 1 20 et 1 30°, on ajoute trois parties d'acétate d'ammonium. On chauffe en maintenant la température entre 1 30° et 1 50° pendant 3 heures. On coule dans l'eau, on filtre et on lave à l'eau. On obtient une
poudre foncée qui teint le coton en brun foncé, à
partir d'une cuve d'hydrosulfite.
Poids de colorant obtenu : 12,4 parties.

EXEMPLE 9 :

On monte la température d'un mélange de 16 parties de
1,5-diaminoanthraquinone, 8 parties d'acide borique et
70 parties en volume de butyrolactone, en 20 minutes à 160°.
et on maintient la température pendant 6 heures et demie
entre 172 et 185°, on dilue avec de l'eau, on filtre, on
lave à l'eau et on sèche. On obtient une poudre foncée
qui teint le coton d'une cuve d'hydrosulfite en brun gris.
On extrait la butyrolactone de la solution aqueuse au moyen
des solvants non miscibles à l'eau et puis on sépare par
distillation pour récupérer le solvant.
Poids de colorant obtenu : 16,8 parties.

EXEMPLE 10 :

On monte la température d'un mélange de 12 parties de
1,4-aminohydroxyanthraquinone, 6 parties d'acide borique,
3 parties de borate de sodium et 50 parties, en volume,
de butyrolactone, en une heure et demie à 165-170° et on
maintient la température pendant 7 heures entre 170-185°,
et puis on distille le solvant sous pression réduite, on
ajoute de l'eau, on filtre, on lave le gâteau de colorant
à l'eau et on sèche. On obtient une poudre foncée qui teint
le coton d'un bain d'hydrosulfite en brun foncé.

EXEMPLE 11 :

On monte la température d'un mélange de 12 parties 1-amino-4-benzoylamino-anthraquinone, 5 parties d'acide borique, 3 parties de borate de soude et 70 parties de butyrolactone, en une heure et demie à 170°, puis on maintient la température pendant environ 7 heures à 175-185°. On distille alors le solvant sous pression réduite. On ajoute de l'eau, on filtre, on lave à l'eau. On obtient une poudre noirâtre qui teint d'un bain d'hydrosulfite en brun foncé jaunâtre.

RE VENDICATIONS

1.      Procédé de préparation de colorants de cuve anthraquinoniques à partir de dérivés anthraquinoniques non cuvables, caractérisé en ce que
a) on dissout un dérivé anthraquinonique et un auxiliaire
   de condensation borique dans un solvant,
b) on effectue la condensation en chauffant,selon un profil
   de température approprié,le dérivé anthraquinonique et
   l'auxiliaire de condensation borique dissous,
c) on récupère le colorant obtenu à l'étape b), et
d) on lave et/ou on sèche le colorant récupéré.

2.      Procédé selon la revendication 1 caractérisé en ce
que l'auxiliaire de condensation borique est l'acide borique.
et/ou un borate alcalin.

3.      Procédé selon l'une des revendications 1 et 2,
caractérisé en ce qu'il comporte en outre l'alkylation,
l'halogénation ou l'acylation du colorant récupéré à l'étape
d) ou à la fin de la réaction de condensation de l'étape b).

4.      Procédé selon l'une des revendications 1 à 3, caractérisé en ce que l'on récupère le colorant par précipitation
du colorant en ajoutant un solvant différent du solvant de
condensation et/ou par filtration.

5.      Procédé selon l'une des revendication 1 à 4,
caractérisé en ce que l'on effectue la condensation à une
température comprise entre 100° C et 220° C, de préférence
1 30°C à 21 0°C.

6.      Procédé selon l'une des revendications 1 à 5, caractérisé en ce que le dérivé anthraquinonique comporte un ou plusieurs radicaux choisis parmi les radicaux hydroxy, amino, halogène, alkyles inférieurs, acylamino, certaines liaisons pouvant être hydrogénées.

7. Procédé selon la revendication 6 , caractérisé en ce que le dérivé anthraquinonique est choisi parmi

   1 ,4 dihydroxyanthraquinone

   1 ,4 diaminoanthraquinone

   1 ,4 hydroxyaminoanthraquinone

   1 ,5 diaminoanthraquinone.

   1 ,4 aminobenzoylaminoanthraquinone

8. Procédé selon l'une des revendications 1 à 7, caractérisé en ce que le solvant a un point d'ébullition élevé et favorise la formation d'un complexe borique du dérivé anthraquinonique.

9. Procédé selon la revendication 8, caractérisé en ce que le solvant est choisi parmi les γ-lactones, les alcools à point d'ébullition élevé et les dérivés glycoliques.

10. Procédé selon la revendication 9, caractérisé en ce que le solvant est la γ-butyrolactone ou le diéthylèneglycol.

11. Procédé selon l'une des revendications 1 à 10, caractérisé en ce qu'on ajoute une quantité active d'au moins un catalyseur.

12. Procédé selon la revendication 11 , caractérisé en ce que les catalyseurs additionnels sont des acides forts ou faibles ou des bases.

13. Procédé selon la revendication 12, caractérisé en

0185569

ce que les catalyseurs sont choisis parmi le bicarbonate de soude, le carbonate de soude, le borate de soude l'acide paratoluènesulfonique, l'acide sulfurique, les sels d'ammonium tels que le chlorure d'ammonium et l'acétate d'ammonium.

14. Colorant cuvable produit par le procédé selon l'une des revendications 1 à 1 3.

15. Produit textile, en particulier à base de coton, teint par un colorant selon la revendication 1 4.

**0185569**

Numéro de la demande

EP 85 40 2228

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-3 268 532 (W. ZERWECK)<br>* Revendications; colonne 2, lignes 4-36; exemples * | 1 | C 09 B 1/48<br>C 09 B 5/00<br>D 06 P 1/22 |
| | --- | | |
| A | BE-A- 691 148 (BASF)<br>* Revendications; exemples * | 1 | |
| | --- | | |
| A | US-A-3 164 449 (E. BUXBAUM)<br>* Revendications; exemples 2,4,5 * | 1 | |
| | --- | | |
| A | FR-A-2 101 827 (CIBA-GEIGY)<br>* Revendications; page 1, lignes 22-36 * | 1 | |
| | --- | | |
| A | DE-A-2 047 291 (BASF)<br>* Revendications; page 2, lignes 8-24 * | 1 | **DOMAINES TECHNIQUES RECHERCHES (Int. Cl.4)** |
| | ----- | | C 09 B |

Le present rapport de recherche a été établi pour toutes les revendications

| Lieu de la recherche | Date d'achevement de la recherche | Examinateur |
|---|---|---|
| LA HAYE | 07-03-1986 | DELANGHE L.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82